(19) Europäisches Patentamt
European Patent Office
Office européen des brevets

(11) **EP 1 976 915 B1**

(12) **EUROPEAN PATENT SPECIFICATION**

(45) Date of publication and mention
of the grant of the patent:
**09.03.2016 Bulletin 2016/10**

(51) Int Cl.:
*C08J 5/04* (2006.01)     *B29C 65/00* (2006.01)
*B29C 70/20* (2006.01)     *F41H 5/04* (2006.01)

(21) Application number: **07702682.1**

(22) Date of filing: **11.01.2007**

(86) International application number:
**PCT/EP2007/000197**

(87) International publication number:
**WO 2007/080113 (19.07.2007 Gazette 2007/29)**

(54) **PROCESS FOR THE PRODUCTION OF A MONOLAYER COMPOSITE ARTICLE, THE MONOLAYER COMPOSITE ARTICLE AND A BALLISTIC-RESISTANT ARTICLE**

VERFAHREN ZUR HERSTELLUNG EINES MONOLAYER-VERBUNDGEGENSTANDES, MONOLAYER-VERBUNDGEGENSTAND UND BALLISTISCH-WIDERSTANDSFÄHIGER GEGENSTAND

PROCÉDÉ DE FABRICATION D'UN ARTICLE COMPOSITE MONOCOUCHE, L'ARTICLE COMPOSITE MONOCOUCHE ET UN ARTICLE RESISTANT AUX PROJECTILES

(84) Designated Contracting States:
**AT BE BG CH CY CZ DE DK EE ES FI FR GB GR HU IE IS IT LI LT LU LV MC NL PL PT RO SE SI SK TR**

(30) Priority: **11.01.2006 EP 06075066**

(43) Date of publication of application:
**08.10.2008 Bulletin 2008/41**

(73) Proprietor: **DSM IP Assets B.V.**
**6411 TE Heerlen (NL)**

(72) Inventors:
• **JACOBS, Martinus, Johannes, Nicolaas**
**NL-6416 EH Heerlen (NL)**

• **VAN ES, Martin, Antonius**
**NL-6443 ED Brunssum (NL)**

(74) Representative: **Vandevijver, Pascale et al**
**DSM Intellectual Property**
**P.O. Box 4**
**6100 AA Echt (NL)**

(56) References cited:
EP-A- 0 645 597          DE-A1- 3 744 348
DE-A1- 10 224 972     NL-A- 9 000 079
US-A- 4 623 574          US-A- 5 724 670
US-A1- 2004 166 755

## Description

The invention relates to a process for the production of a monolayer composite article comprising a unidirectional array of high performance polyolefin fibers, the process comprising the steps of

- positioning of the fibers in a coplanar, parallel fashion
- consolidation of the fibers to obtain the monolayer composite article.

The invention also relates to the monolayer composite article and to a ballistic-resistant article comprising the monolayer composite article. Ballistic resistant articles may be used in, for instance, helmets, as inserts in bulletproof vests, as armouring on military vehicles and in ballistic-resistant panels.

A ballistic-resistant article of this type is disclosed in EP-A-833742.

The known ballistic-resistant article affords already good protection against impacts of projectiles such as shrapnel or bullets. The level of protection may be quantified by means of the Energy Absorption (Eabs) or by means of the Specific Energy Absorption (SEA), a measure of the amount of energy that can be absorbed by an article on impact of a projectile per unit aerial density of the article.

A ballistic resistant article is furthermore known from EP-A-0 645 597. In this publication a network of high strength fibers and a matrix material is disclosed in which the matrix material is distributed substantially uniform over a fiber network; followed by consolidating the matrix material and the fiber network to form a fiber network layer; adhering together at least 2 of such fiber network layers; and finally texturing the surface of the fiber network layer.

Although the known ballistic-resistant article affords already good protection against impacts of projectiles there is still a great need for ballistic-resistant articles that can offer increased protection against impacts of projectiles of various kinds, especially against projectiles in the form of bullets.

Object of the invention is therefore to provide a process for the production of a monolayer composite article, that when applied in a ballistic-resistant article provides improved protection.

Surprisingly this object is obtained by providing a process for producing the monolayer composite article, which process comprises after the step of positioning of the fibers in a coplanar, parallel fashion and before or after the step of consolidation of the fibers in the monolayer composite article, a step in which the fibers are stretched.

Ballistic-resistant articles comprising the composite produced by the process according to the invention show a remarkable improved protection. Such a level of protection cannot be obtained by simply stretching the fibers any further in the production process of the fibers. One of the reasons is that by further drawing the fibers in the production process, frequent break of the fibers occurs, which is detrimental for smooth production process of fibers with a high and constant quality level.

Owing to the surprisingly high level of protection achieved, not only articles with an even further increased level of protection for a given weight of the article are now available but also articles affording the same level of protection as the known article at a significantly lower weight. Low weight per unit area is of great importance in many applications. This is the case, for instance, in the field of personal protective equipment such as helmets, shields, shoes and the like. Low weight is also essential for the application of ballistic-resistant articles in for instance helicopters, motorcars and high-speed, highly maneuverable combat vehicles.

In the context of the present application monolayer composite article means a layer of substantially coplanar, parallel fibers, being consolidated so that they maintain their coplanar, parallel fashion. Preferably a plastic is used for the consolidation, for example by embedding the fibers partially or wholly in the plastic in this way serving as matrix material and binding the fibers together. Such monolayer composite articles and methods of obtaining such a monolayer composite article are disclosed in for instance EP-B-0.191.306 and WO 95/00318. A monolayer composite article may be obtained by for instance pulling a number of fibers from fiber bobbins located on a fiber bobbin frame over a comb so that they are oriented in coplanar and parallel fashion in one plane and then consolidating the fibers in that coplanar and parallel fashion, for example by embedding the fibers in the plastic matrix material.

The stretching of the fibers may take place by increasing the transport velocity of the fibers at a position in the process line for the production of the monolayer composite article. Preferably this is accomplished by transporting the fibers over at least a first and at least a subsequent second transportation roll, the second transportation roll having a tangential velocity at its surface that is higher than the tangential velocity at its surface of the first roll. The velocity of the fibers is equal to the tangential velocity of the transportation rolls at their surfaces, which equals the product of angular velocity of the rolls and their radii.

In order to reduce slip of the fibers at the surface of the rolls the contact surface of the fibers with the rolls are preferably large. Most preferably two sets of rolls are used having the same tangential velocity in a set, in the first set comprising the first transportation roll, the second set comprising the second transportation roll.

Very good results are obtained if the tangential velocity of the second roll is at most 3 times the tangential velocity of the first roll. More preferably the tangential velocity of the second roll is at most 2 times, most preferably at most 1.5 times the tangential velocity of the first roll. Preferably the tangential velocity of the second roll is at least 1.05 times, more preferably at least 1.10 times, even more preferably at least 1.15, most preferably at least 1.25 times the tangential velocity of the first roll.

The fibers may be stretched at any temperature, as long as the temperature is not that high that the fibers lose their mechanical properties. Therefore the fibers are preferably stretched at a temperature below 160°C. In the event that the fibers are based on high molecular weight polyethylene the fibers are preferably stretched at a temperature below 155°C. In order to decrease the forces that need to be applied to stretch the fibers, stretching is carried out at elevated temperature, for instance between 60 and 160 °C. Preferably the fibers are stretched at a temperature above 140°C, more preferably above 145 °C.

Good results are obtained if immediately after stretching the fibers are quenched to a lower temperature, preferably below 100°C, more preferably below 80°C, most preferably below 60°C. Quenching is favourably carried out by cooling the fibers at the second transportation roll, or at a further roll immediately after the second transportation roll. It is also possible to cool the fibers by spraying the fibers with a water-based emulsion of the plastic matrix material. The fibers may be kept at the stretching temperature for about 10 seconds to about 5 minutes. In such case stretching starts during heating up the fibers to the stretching temperature, or as soon as possible if the fibers have reached that temperature. Heating the fibers may simply be accomplished by transporting the fibers through an oven, which oven is positioned in the production line between the first and the second transportation rolls. Preferably the fibers are kept under tension during heating up and cooling down, before and after the stretching step.

In the process for producing the monolayer composite article according to the invention, fibers may be used that have previously been coated with a polymer other than the plastic matrix material in order to, for instance, protect the fibers during handling or in order to obtain better adhesion of the fibers onto the plastic matrix material.

Consolidation by embedding the fibers in the plastic matrix material may be effected by applying one or more films of the plastic to the top, the bottom or to both sides of the plane of the fibers and then passing these, together with the fibers, through a set of heated pressure rolls. Preferably, however, the fibers are consolidated by coating the fibers with an amount of a liquid substance containing the plastic matrix material. The advantage of this is that more rapid and better impregnation of the fibers is achieved. The liquid substance may be for example a solution, a dispersion or a melt of the plastic. If a solution or a dispersion of the plastic is used in the manufacture of the monolayer composite article, the process also comprises evaporating the solvent or dispersant.

Further methods of consolidation may comprise sticking a plastic film at one or both surfaces of the layer of fibers, sticking plastic tapes at one or at both surfaces of the layer of fibers. In this case the fibers are only embedded for a small part.

The step of stretching the fibers may be before or after the consolidation of the fibers. Preferably the fibers are stretched after consolidation. In that case it is possible to stretch to very high stretch ratios and still having a smooth running continuous process. In case of stretching before the consolidation of the fibers, good results are obtained if the fibers are stretched; kept under tension after the stretching step, while consolidating the fibers by applying the plastic matrix material. During the step of stretching the fibers, preferably at least 10, more preferably at least 25, even more preferably at least 50 and even more preferably at least 75 fibers are stretched simultaneously.

High performance polyolefin fibers are known to the skilled person. The fibers have an elongate body whose length dimension is greater than the transverse dimensions of width and thickness. The term "fibers" includes a monofilament, a multifilament yarn, a tape, a strip, a thread, a staple fiber yarn and other elongate objects having a regular or irregular cross-section. For application of the fibers in ballistic-resistant articles it is essential that the fibers be ballistically effective, which, more specifically, requires that they have a high tensile strength, a high tensile modulus and/or high energy absorption. The fibers have a tensile strength of at least 1.2 GPa and a tensile modulus of at least 40 GPa.

Homopolymers and copolymers of polyethylene and polypropylene are particularly suitable as polyolefins for the production of the high performance polyolefin fibers. Furthermore, the polyolefins used may contain small amounts of one or more other polymers, in particular other alkene-1-polymers.

It is preferred for the reinforcing fibers in the monolayer composite article to be of high-molecular weight linear polyethylene, having a weight average molecular weight of at least 400,000 g/mol, more preferably having a weight average molecular weight of at least 800,000 g/mol, even more preferably having a weight average molecular weight of at least 1,200,000 g/mol. Most preferably the reinforcing fibers of high-molecular weight linear polyethylene have a weight average molecular weight of at least 2,500,000 g/mol.

Linear polyethylene here means polyethylene having less than 1 side chain per 100 C atoms, preferably less than 1 side chain per 300 C atoms.

Preferably, use is made of polyethylene fibers consisting of polyethylene filaments prepared by a gel spinning process as described in for example GB-A-2042414 and GB-A-2051667. This process essentially comprises the preparation of a solution of a polyolefin of high intrinsic viscosity, spinning the solution to filaments at a temperature above the dissolving temperature, cooling down the filaments below the gelling temperature so that gelling occurs and drawing the filaments before, during or after removal of the solvent.

The shape of the cross-section of the filaments may be selected here through selection of the shape of the spinning aperture.

Preferably, use is made of multifilament yarns of ultrahigh molecular weight linear polyethylene with an intrinsic viscosity of at least 5 dl/g, determined in decalin at 135°C, and a yarn titre of at least 50 denier, with the yarn having a tensile strength of at least 25, more preferably at least 30, even more preferably at least 32, even more preferably at least 34 cN/dtex and a tensile modulus of at least 1000 cN/dtex. Preferably the filaments have a cross-section aspect ratio of at most 3. The use of these fibers has been found to improve the high level of protection of the ballistic-resistant article of the invention still further.

The plastic matrix material may wholly or partially consist of a polymer material, and optionally may contain fillers usually employed for polymers. The polymer may be a thermoset or thermoplastic or mixtures of both. In one preferred embodiment a soft plastic is used, in particular it is preferred for the plastic matrix material to be an elastomer with a tensile modulus (at 25°C) of at most 41 MPa. Preferably, the elongation to break of the plastic is greater than the elongation to break of the reinforcing fibers. The elongation to break of the matrix preferably is from 3 to 500%.

Thermosets and thermoplastics that are suitable for the monolayer composite article are listed in for instance WO-A-91/12136 (line 26, page 15 to line 23, page 21). Preferably, vinylesters, unsaturated polyesters, epoxies or phenol resins are chosen as matrix material from the group of thermosetting polymers. These thermosets usually are in the monolayer in partially set condition (the so-called B stage) before the stack of monolayers is cured during compression of the ballistic-resistant article. From the group of thermoplastic polymers polyurethanes, polyvinyls, polyacryls, polyolefins or thermoplastic, elastomeric block copolymers such as polyisoprene-polyethylene-butylene-polystyrene or polystyrene-polyisoprene-polystyrene block copolymers are preferably chosen as matrix material.

The plastic matrix material content of the monolayer composite article is chosen sufficiently low, for example to save weight, preferably lower than 30 wt.% relative to the total weight of the monolayer. More preferably, the content is lower than 20 wt.%, most preferably lower than 10 wt.%.

The invention also relates to a monolayer composite article obtainable by the process according to the invention as outlined above.

The invention also relates to an article comprising polyolefin high performance fibers having a stretch ratio at break of less than 1.4, preferably less than 1.35, more preferably less than 1.30, more preferably less than 1.25 more preferably less than 1.20, more preferably less than 1.15, most preferably less than 1.1, whereby the stretch ratio at break is measured at a temperature of 150°C and at a deformation rate of 0.2 min$^{-1}$.

Preferably such an article is a monolayer composite article as defined above. More preferably such an article comprises a monolayer composite article as defined above.

A further preferred article is a cross-layered composite article, comprising at least one pair of the monolayer composite articles according to the invention, the fiber direction in each monolayer composite article in the cross-layered article of the invention is rotated with respect to the fiber direction in an adjacent monolayer composite article. Good results are achieved when this rotation amounts to at least 45 degrees. Preferably, this rotation amounts to approximately 90 degrees.

Further preferred articles include a ballistic-resistant article for use as protective means. It is known how to produce such ballistic-resistant articles comprising a monolayer composite article.

Normally in a first step a stack comprising several monolayer composite articles is produced. Preferably the fiber direction in each monolayer composite article in the ballistic-resistant article of the invention is rotated with respect to the fiber direction in an adjacent monolayer. Preferably the stack is made out of the cross-layered composite articles according to the invention. Preferably the monolayer composite articles in the cross-layered composite article are interconnected e.g. through calendaring. Calendaring conditions such as temperature and pressure are chosen sufficiently high to prevent delamination of the monolayer composite articles, while on the other hand not too high to prevent deterioration of fiber properties e.g. due to melting of the fiber. Typical ranges for temperature are preferably between 75 and 155 °C, a typical pressure will be preferably at least 0.05 MPa. The deterioration of the fiber properties subsequently are reflected in a reduced anti-ballistic performance. Good conditions for temperature and pressure can be found by the skilled man with some routing experimentation within the above mentioned boundaries.

In a further step the stack may be enclosed in an envelope or connected by sewing. In this way a flexible ballistic-resistant article is obtained, for instance for use in a bullet resistant or bulletproof vest, that is suitable for use under normal clothing.

Ballistic-resistant articles with a very high level of protection are obtained if elevated temperature and pressure are applied to the stack, so that the monolayer composite articles or the cross-layered composite article are adhered by moulding. These articles are rigid ballistic-resistant articles. Good examples are helmets, shields, armour panels for use in vehicles and aircraft, inserts in for example bullet resistant vests etc.

The present invention leads to composite articles and ballistic resistant articles showing improved protection compared to the known articles. Therefore in one aspect the invention also relates to a monolayer composite articles and to a cross-layered composite article that show a $v_{50}$ of at least 380 m/s, if produced into flexible composite article, comprising a stack of the monolayer composite article or the cross-layered composite article, the flexible composite article having an areal density between 1.95 and 2.05 $kg/m^2$ and shot by a 9 mm parabellum having a weight of 8 gram, according to STANAG 2920. Preferably the $v_{50}$ is at least 400 m/s, more preferably at least 420 m/s, more preferably at least 450 m/s, more preferably at least 480 m/s, more preferably at least 520 m/s, more preferably at least 560 m/s, most preferably at least 600 m/s. It will be clear that the areal density may be increased by the use of a larger amount of monolayer composite articles and/or cross-layered composite article if higher $v_{50}$ values are required.

In another aspect the invention relates to a flexible ballistic resistant article, preferably a bullet resistant vest, having a SEA, if shot by a 9 mm parabellum having a weight of 8 gram, according to STANAG 2920, of at least 300 $J.m^2/kg$, more preferably at least 350 $J.m^2/kg$, more preferably at least 400 $J.m^2/kg$, most preferably at least 450 $J.m^2/kg$.

In yet another aspect the invention relates to a rigid ballistic-resistant article, this article having an areal density between 1.9 and 2.1 $kg/m^2$ and having a $v_{50}$, if shot by a 9 mm parabellum having a weight of 8 gram, according to STANAG 2920 of at least 400 m/s, more preferably at least 420 m/s, more preferably at least 450 m/s, more preferably at least 480 m/s, more preferably at least 520 m/s, more preferably at least 560 m/s, most preferably at least 600 m/s. It will be clear that the areal density may be increased by the use of a larger amount of monolayer composite articles and/or cross-layered composite article if higher $v_{50}$ values are required.

The invention will be further explained in the examples.

Measurements

Determination of stretch ratio at break of fibers in monolayer composite article. A sample having a width of 10 mm and a length of 1 meter comprising coplanar fibers of the same length is taken out of the monolayer composite article according to the invention. The sample is placed in a universal tensile testing machine in an oven at 150 °C, under a small tension of about 3% of the breaking load, in order to avoid the fibers to shrink. Once the temperature equilibrium in the oven is established the sample is drawn with a deformation rate of 0.2 $min^{-1}$ until rupture of the sample. The stretch ratio at break is the length at break of the sample/ original length of sample that is stretched.

The value is taken as the average of 5 measurements.

It is also possible to obtain a single fiber out of an article and to measure the ratio of break at the same temperature and deformation rate.

Production of flexible or rigid ballistic-resistant articles

A stack of cross-layered composite articles is made. The angle between the fiber directions in subsequent monolayers in the stack is always 90 degrees. The stacks have an areal density of 2.0 $kg/m^2$ +/- 0.1 $kg/m^2$, and dimensions of 0.4 m * 0.4 m. In case of a flexible ballistic-resistant article the stack of cross-layered composite articles is fixed around the perimeter by sewing. In case of a rigid ballistic resistant article the stack is consolidated in a heating press at 120 °C and 75 bars for 30 minutes.

Determination of $v_{50}$ and specific energy absorption (SEA)

parabellum The $v_{50}$ of the ballistic resistant articles is determined by using 9mm parabellum bullets according to Stanag 2920. The SEA is calculated according to the formula:

$$SEA = 0.5 * m * v_{50}^2 / AD,$$

in which formula

SEA is specific energy absorption (J. $m^2/kg$).
m is the mass of the bullet (8 gram).
$v_{50}$ is the velocity in m/s of the bullets at which 50% of the bullets are stopped by the ballistic-resistant article.
AD is the areal density of the articles ($kg/m^2$).

Determination of intrinsic viscosity, IV

The Intrinsic Viscosity is determined according to method PTC-179 (Hercules nc. Rev. Apr. 29, 1982) at 135°C in decalin, the dissolution time being 16 hours, with DBPC as anti-oxidant in an amount of 2 g/l solution, by extrapolating the viscosity as measured at different concentrations to zero concentration;

Comparative experiment A

A monolayer composite article was produced out of Dyneema® SK 76, 1760 dtex fibers were used. A ply of 4 monolayers in a cross-layers fashion having at both sides an lldpe cover film were produced. A ply has an areal density of 145 g/m$^2$, of which 72 % was due to the fibers, 18 % was due to matrix material, which is a SIS rubber, and 10% was due to the lldpe films.

Flexible ballistic composite articles were produced, by making a stack of 14 plies and sewing the stack around the perimeter. The articles were tested according to Stanag 2920. Also the stretch ratio at break of the fibers was determined. Results are presented in table 1

Comparative experiment B

A monolayer composite article was produced out of Dyneema® SK 76, 1760 dtex fibers were used. A ply of 4 monolayers in a cross-layered fashion was produced. A ply has an areal density of 260 g/m$^2$, of which 80% was due to the fibers and 20 % was due to the matrix material, which is a SIS rubber. Rigid ballistic-resistant articles were produced by making a stack of 8 plies and by compressing the stack as indicated above.

Example 1

Comparative experiment A was repeated, however during the production of the monolayer composite article, before the application of the matrix material, the fibers in the monolayer composite article were stretched with a stretch ratio of 1.33. The areal density of the ply was 113 g/m2, and the ballistic-resistant article comprised 18 plies. Results are presented in table 1.

Example 2

Comparative experiment A was repeated, however during the production of the monolayer composite article, before the application of the matrix material, the fibers in the monolayer composite article were stretched with a stretch ratio of 1.44. The areal density of the monolayer composite article was 105 g/m2, and the ballistic-resistant article comprised 19 plies. Results are presented in table 1.

Example 3

Comparative experiment B was repeated, however during the production of the monolayer composite article, before the application of the matrix material, the fibers in the monolayer composite article were stretched with a stretch ratio of 1.33. The areal density of the ply was 195 g/m2, and the ballistic-resistant article comprised 10 plies. Results are presented in table 1.

Example 4

Comparative experiment B was repeated, however during the production of the monolayer composite article, before the application of the matrix material, the fibers in the monolayer composite article were stretched with a stretch ratio of 1.44. The areal density of the ply was 180 g/m2, and the ballistic-resistant article comprised 11 plies. Results are presented in table 1.

| Comparative exp./Example | Stretch ratio (-) | Stretch ratio at break. | $V_{50}$ (m/s) | SEA (J/(kg/m2)) |
|---|---|---|---|---|
| A | 1 | 1.58 | 375 | 280 |
| B | 1 | 1.63 | 355 | 251 |
| 1 | 1.33 | 1.28 | 425 | 365 |
| 2 | 1.44 | 1.19 | 449 | 403 |
| 3 | 1.33 | 1.29 | 461 | 422 |
| 4 | 1.44 | 1.20 | 477 | 455 |

It is clear from the results in table 1 that considerable improved values for the $v_{50}$ and the SEA are obtained, which values are higher than those ever obtained before.

**Claims**

1.  Process for the production of a monolayer composite article comprising an unidirectional array of polyolefin fibers having a tensile strength of at least 1.2 GPa and a tensile modulus of at least 40 GPa, the process comprising the steps of

    - positioning of the fibers in a coplanar, parallel fashion
    - consolidation of the fibers with a plastic matrix material to obtain the monolayer composite article, **characterized in that**, the process comprises after the step of position of the fibers and before or after the step of consolidation of the fibers, a step in which the fibers are stretched.

2.  Process for the production of a monolayer composite article according to claim 1, wherein the fibers are consolidated by embedding the fibers partially or wholly in a plastic matrix material.

3.  Process for the production of a monolayer composite article according to any one of claims 1-2, wherein the stretching of the fibers takes place by increasing the transport velocity of the fibers at a position in the process line for the production of the monolayer composite article.

4.  Process for the production of a monolayer composite article according to claim 3, wherein the increase in the transport velocity is accomplished by transporting the fibers over at least a first and at least a subsequent second transportation roll, the second transportation roll having a tangential velocity at its surface that is higher than the tangential velocity at its surface of the first roll.

5.  Process for the production of a monolayer composite article according to claims 3 or 4, wherein the increase in transport velocity is at most a factor of 3.

6.  Process for the production of a monolayer composite article according to any one of claims 3-5, wherein the increase in transport velocity is at least a factor of 1.05.

7.  Process for the production of a monolayer composite article according to any one of claims 1 - 6, wherein the step of stretching the fibers is after the consolidation of the fibers.

8.  Process for the production of a cross-layered composite article whereby at least one pair of monolayer composite articles according to any one of claims 1-7 is stacked whereby the fiber direction in each monolayer composite article is rotated with respect to the fiber direction in an adjacent monolayer.

9.  Monolayer composite article obtainable by the process according to anyone of claims 1 -8.

10. Monolayer according to claim 9 comprising a high performance polyolefin fiber having a stretch ratio at break of less than 1.4, measured at 150 °C and with a deformation rate of 0.2 min$^{-1}$.

11. A cross-layered composite article comprising at least one pair of the monolayer composite article according to any one of claims 9-10, the fiber direction in each monolayer being rotated with respect to the fiber direction in an adjacent monolayer.

12. Process according to any one of claims 1-8 or an article according to anyone of claims 9 - 11, wherein the high performance polyolefin fibers are obtained by the gel spinning process.

13. Process or article according to any of the previous claims, wherein the polyolefin fibers are fibers of high molecular weight linear polyethylene having a weight average molecular weight of at least 400,000 g/mol.

14. Use of the monolayer or the cross layered composite article according to any one of claims 9-11 in the manufacture of flexible ballistic resistant articles.

15. Use of the monolayer or the cross layered composite article according to any one of claims 9-11 in the manufacture of rigid ballistic resistant articles.

**Patentansprüche**

1. Verfahren zur Herstellung eines monoschichtigen Verbunderzeugnisses, enthaltend eine unidirektionale Anordnung von Polyolefinfasern mit einer Zugfestigkeit von mindestens 1,2 GPa und einem Zugmodul von mindestens 40 GPa, bei dem man

   - die Fasern koplanar, parallel positioniert
   - die Fasern mit einem Kunststoff als Matrixmaterial zum monoschichtigen Verbunderzeugnis konsolidiert, **dadurch gekennzeichnet, dass** man nach dem Positionieren der Fasern und vor oder nach dem Konsolidieren der Fasern die Fasern verstreckt.

2. Verfahren zur Herstellung eines monoschichtigen Verbunderzeugnisses nach Anspruch 1, bei dem man die Fasern durch partielles oder gänzliches Einbetten in einem Kunststoff als Matrixmaterial konsolidiert.

3. Verfahren zur Herstellung eines monoschichtigen Verbunderzeugnisses nach einem der Ansprüche 1-2, bei dem man zum Verstrecken der Fasern die Transportgeschwindigkeit der Fasern an einer Stelle im Verfahrensablauf zur Herstellung des monoschichtigen Verbunderzeugnisses steigert.

4. Verfahren zur Herstellung eines monoschichtigen Verbunderzeugnisses nach Anspruch 3, bei dem zum Steigern der Transportgeschwindigkeit die Fasern über mindestens eine erste und mindestens eine anschließende, zweite Transportwalze laufen lässt, wobei die zweite Transportwalze an ihrer Oberfläche über eine höhere tangentiale Geschwindigkeit als die verfügt, über die die erste Walze an ihrer Oberfläche verfügt.

5. Verfahren zur Herstellung eines monoschichtigen Verbunderzeugnisses nach Anspruch 3 oder 4, bei dem man die Transportgeschwindigkeit auf höchstens das Dreifache steigert.

6. Verfahren zur Herstellung eines monoschichtigen Verbunderzeugnisses nach einem der Ansprüche 3-5, bei dem man die Transportgeschwindigkeit auf mindestens das 1,05-Fache steigert.

7. Verfahren zur Herstellung eines monoschichtigen Verbunderzeugnisses nach einem der Ansprüche 1-6, bei dem man die Fasern nach ihrer Konsolidierung verstreckt.

8. Verfahren zur Herstellung eines kreuzgeschichteten Verbunderzeugnisses, bei dem man mindestens ein Paar der monoschichtigen Verbunderzeugnisse gemäß einem der Ansprüche 1-7 so übereinanderlegt, dass sich bei jedem monoschichtigen Verbunderzeugnis die Faserrichtung gegenüber der Faserrichtung in einer daran angrenzenden Monoschicht dreht.

9. Monoschichtiges Verbunderzeugnis, erhältlich durch das Verfahren gemäß einem der Ansprüche 1-8.

10. Monoschicht nach Anspruch 9, umfassend eine Hochleistungspolyolefinfaser mit einem bei 150°C und einer Verformungsgeschwindigkeit von 0,2 min$^{-1}$ gemessenen Reißstreckverhältnis von weniger als 1,4.

11. Kreuzgeschichtetes Verbunderzeugnis, umfassend mindestens ein Paar der monoschichtigen Verbunderzeugnisse gemäß einem der Ansprüche 9-10, wobei bei jeder Monoschicht die Faserrichtung gegenüber der Faserrichtung in einer daran angrenzenden Monoschicht gedreht ist.

12. Verfahren nach einem der Ansprüche 1-8 bzw. Erzeugnis nach einem der Ansprüche 9-11, bei dem die Herstellung der Hochleistungspolyolefinfasern nach dem Gelspinnverfahren erfolgt.

13. Verfahren bzw. Erzeugnis nach einem der vorhergehenden Ansprüche, bei dem es sich bei den Polyolefinfasern um Fasern aus hochmolekularem linearem Polyethylen mit einem gewichtsmittleren Molekulargewicht von mindestens 400000 g/mol handelt.

14. Verwendung des monoschichtigen bzw. kreuzgeschichteten Verbunderzeugnisses gemäß einem der Ansprüche 9-11 zur Herstellung von weichen Ballistikschutzerzeugnissen.

**15.** Verwendung des monoschichtigen bzw. kreuzgeschichteten Verbunderzeugnisses gemäß einem der Ansprüche 9-11 zur Herstellung von harten Ballistikschutzerzeugnissen.

**Revendications**

**1.** Procédé de fabrication d'un article composite monocouche comprenant un réseau unidirectionnel de fibres de polyoléfine ayant une résistance à la traction d'au moins 1,2 GPa et un module en traction d'au moins 40 GPa, le procédé comprenant les étapes qui consistent à :

- positionner les fibres dans le même plan, parallèlement,
- amalgamer les fibres avec une matrice en matière plastique pour obtenir l'article composite monocouche, **caractérisé en ce que** le procédé comprend, après l'étape de positionnement des fibres et avant ou après l'étape d'amalgame des fibres, une étape dans laquelle les fibres sont étirées.

**2.** Procédé de fabrication d'un article composite monocouche selon la revendication 1, dans lequel les fibres sont amalgamées par incorporation des fibres, en partie ou dans leur totalité, dans une matrice en matière plastique.

**3.** Procédé de fabrication d'un article composite monocouche selon l'une quelconque des revendications 1 ou 2, dans lequel l'étirage des fibres est réalisé par augmentation de la vitesse de transport des fibres à un emplacement dans la chaîne de fabrication de l'article composite monocouche.

**4.** Procédé de fabrication d'un article composite monocouche selon la revendication 3, dans lequel l'augmentation de la vitesse de transport est réalisée par transport des fibres sur au moins un premier rouleau de transport et au moins un deuxième rouleau de transport situé ensuite, le deuxième rouleau de transport ayant une vitesse tangentielle à sa surface qui est supérieure à la vitesse tangentielle à la surface du premier rouleau.

**5.** Procédé de fabrication d'un article composite monocouche selon la revendication 3 ou 4, dans lequel l'augmentation de la vitesse de transport est selon un facteur de 3 au maximum.

**6.** Procédé de fabrication d'un article composite monocouche selon l'une quelconque des revendications 3 à 5, dans lequel l'augmentation de la vitesse de transport est selon un facteur de 1,05 au moins.

**7.** Procédé de fabrication d'un article composite monocouche selon l'une quelconque des revendications 1 à 6, dans lequel l'étape d'étirage des fibres a lieu après l'amalgame des fibres.

**8.** Procédé de fabrication d'un article composite à couches croisées, dans lequel au moins une paire d'articles composites monocouche selon l'une quelconque des revendications 1 à 7 est superposée, la direction des fibres dans chaque article composite monocouche étant tournée par rapport à la direction des fibres dans une monocouche adjacente.

**9.** Article composite monocouche pouvant être obtenu par le procédé selon l'une quelconque des revendications 1 à 8.

**10.** Monocouche selon la revendication 9, comprenant une fibre de polyoléfine haute performance ayant un rapport d'allongement à la rupture inférieur à 1,4, mesuré à 150 °C et à une vitesse de déformation de 0,2 min$^{-1}$.

**11.** Article composite à couches croisées comprenant au moins une paire de l'article composite monocouche selon l'une quelconque des revendications 9 ou 10, la direction des fibres dans chaque monocouche étant tournée par rapport à la direction des fibres dans une monocouche adjacente.

**12.** Procédé selon l'une quelconque des revendications 1 à 8 ou article selon l'une quelconque des revendications 9 à 11, dans lequel les fibres de polyoléfine haute performance sont obtenues par le procédé de filage à l'état de gel.

**13.** Procédé ou article selon l'une quelconque des revendications précédentes, dans lequel les fibres de polyoléfine sont des fibres de polyéthylène linéaire à haute masse moléculaire ayant une masse moléculaire moyenne en poids d'au moins 400 000 g/mol.

**14.** Utilisation de l'article composite monocouche ou à couches croisées selon l'une quelconque des revendications 9 à 11 dans la fabrication d'articles pare-balles flexibles.

15. Utilisation de l'article composite monocouche ou à couches croisées selon l'une quelconque des revendications 9 à 11 dans la fabrication d'articles pare-balles rigides.

**EP 1 976 915 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 833742 A
- EP 0645597 A
- EP 0191306 B
- WO 9500318 A
- GB 2042414 A
- GB 2051667 A
- WO 9112136 A